(19) **Europäisches Patentamt / European Patent Office / Office européen des brevets**

(11) **EP 3 358 336 B1**

(12) **EUROPÄISCHE PATENTSCHRIFT**

(45) Veröffentlichungstag und Bekanntmachung des Hinweises auf die Patenterteilung:
**13.10.2021   Patentblatt 2021/41**

(51) Int Cl.:
*G01N 19/02* (2006.01)     *B60T 17/22* (2006.01)

(21) Anmeldenummer: **17154522.1**

(22) Anmeldetag: **03.02.2017**

(54) **VERFAHREN UND VORRICHTUNG ZUR BEWERTUNG DES GERÄUSCHVERHALTENS EINES FLUIDS**

METHOD AND DEVICE FOR EVALUATING THE ACOUSTIC PROPERTIES OF A FLUID

PROCÉDÉ ET DISPOSITIF D'ÉVALUATION DES CARACTÉRISTIQUES SONORES D'UN FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.08.2018   Patentblatt 2018/32**

(73) Patentinhaber: **Clariant International Ltd**
**4132 Muttenz (CH)**

(72) Erfinder:
• **MOGCK, Oliver**
  **84508 Burgkirchen (DE)**
• **HARDER, Johannes**
  **81925 München (DE)**
• **WEIDE, Timo**
  **Charlotte, NC 28277 (US)**
• **GREBE, Markus**
  **64683 Einhausen (DE)**
• **BUSE, Hendrik**
  **76744 Wörth am Rhein (DE)**

(74) Vertreter: **Mikulecky, Klaus**
**Clariant Produkte (Deutschland) GmbH**
**Patent & License Management Chemicals**
**Industriepark Höchst, G 860**
**65926 Frankfurt am Main (DE)**

(56) Entgegenhaltungen:
| | |
|---|---|
| WO-A1-2014/179537 | JP-A- S59 206 740 |
| US-A- 5 679 883 | US-A1- 2001 020 391 |
| US-A1- 2010 223 977 | US-B1- 6 752 001 |

**Beschreibung**

Die Erfindung betrifft ein Verfahren zur Bewertung eines Geräuschverhaltens eines Fluids nach Anspruch 1, insbesondere einer Bremsflüssigkeit. Die Erfindung betrifft ferner eine Vorrichtung zur Bewertung eines Geräuschverhaltens eines Fluids nach Anspruch 12, insbesondere einer Bremsflüssigkeit.

Stand der Technik

Fluide, beispielsweise viskose Flüssigkeiten wie Schmieröle oder Bremsflüssigkeiten, verursachen oftmals störende Geräusche beim Einsatz in einem technischen System, beispielsweise in einer Pumpe oder einem Kompressor. Eine einfache quantifizierende Prüfung des Geräuschverhaltens von Fluiden ist in bisherigen Prüfketten zur Prüfung von manuell oder elektromotorisch angetriebenen Pumpen, welche Druck und Durchflussmenge in einem Fahrzeugbremssystem bereitstellen, nicht vorhanden. Auffälligkeiten mit Geräuschen durch ein Fluidum werden meist erst in einem späten Entwicklungsstadium oder im Praxiseinsatz festgestellt.

Aus der DIN 51384 ("Testing of Mineral Oil"; 1978) ist eine Vorrichtung zur Prüfung von Schmierstoffen bekannt. Die Vorrichtung umfasst einen Gegenkörper, welcher relativ zu einem Grundkörper bewegbar ist, während sich das Fluid zwischen dem Gegenkörper und dem Grundkörper befindet. Die Vorrichtung gestattet dabei parametrierbare translatorisch oszillierende Bewegung sowie Kraftbeaufschlagung und Temperierung als Randbedingungen. Mittels dieser Vorrichtung sind tribologische Prüfungen, insbesondere zur Bestimmung von Reibungs- und Verschleißmessgrößen für Schmieröle durchführbar. Dabei hat der Gegenkörper die Form einer Zylinderrolle und der Grundkörper die Form einer flachen Scheibe.

In der Druckschrift "Werkstoffe in Tribosystemen - Prüfmethodik und Modellierung" (FFD Special Ausgabe 1/2006, Freudenberg Forschungsdienste KG, Dr. J. Molter) ist eine ähnliche Vorrichtung zur Prüfung von Schmierstoffen offenbart. Auch wird ein Prüfverfahren beschrieben, bei welchem ein Elastomerpad in einen Adapter eingelegt und kugelförmig nach außen gepresst wird. Das Elastomerpad wird als Gegenkörper über einen flachen metallischen Grundkörper bewegt.

Die Eigenschaften und das Verhalten der Grundkörper und Gegenkörper sind von deren Materialien ebenso wie von deren Gestalt dieser abhängig.

Grundkörper aus einem Metallwerkstoff besitzen in ihrer Eigenschaft im Wesentlichen eine Oberflächentopographie, welche sich zumindest mit Verfahren nach ISO-Standards [ISO 4287 (s. 2010) und die DIN EN ISO 13565-2] beschreiben lässt. Dem Technischen Handbuch "Hydraulikkomponenten", Freudenberg Sealing Technologies GmbH & Co. KG, 2015 sind Oberflächenwerte für Gegenkörper aus Stahl zu entnehmen.

In dem Lehrbuch "Tribologie-Handbuch: Tribometrie, Tribomaterialien, Tribotechnik" (4. Auflage 2015, H. Czichos, K. H. Habig) werden Grundlagen der Tribologie allgemein, insbesondere Reibung, Verschleiß und Schmierung beschrieben. Weitere Begriffe und Definitionen der Tribologie sind der Schrift "GfT Arbeitsblatt 7 Tribologie - Verschleiß, Reibung - Definitionen, Begriffe, Prüfung" (Gesellschaft für Tribologie Aachen, 2002) zu entnehmen.

In dem Lehrbuch "Contact Mechanics" (Cambridge University Press, 1985, K. L. Johnson) werden die Kontaktmechaniken von Körpern mit unterschiedlichen Geometrien, insbesondere einer Schnurgeometrie und einer sphärischen Geometrie beschrieben. Auch in dem Werk "Ueber die Berührung fester elastischer Körper" (1881, H. Hertz) sind Grundlagen der Kontaktmechanik beschrieben.

In der EP 2379382 B1 sowie in der DE 10 2008 063 891 A1 wird eine Methode zur Erfassung sowie zur Bezifferung des Stick-Slip Effekts mit technisch gebräuchlichen Methoden anhand der Reibung zwischen Bremsscheibe und Bremsbelag eines Schienenfahrzeugs beschrieben. Der Stick-Slip Effekt, der auch als Ruckgleiten bezeichnet wird, tritt zwischen Bremsscheibe und Bremsbelag auf.

US 5 679 883 A offenbart ein Verfahren zur Bewertung eines Geräuschverhaltens, ebenso wie US 6 752 001 B1. US 2001/020391 A1 behandelt das Reibungsverhalten zwischen gegenläufigen Komponenten, die ein "lubricated frictional system" bilden können.

Die Bestimmung der tribologischen Eigenschaften von Fluiden, insbesondere von Bremsflüssigkeiten, in einem technischen System benötigt eine detaillierte Analyse der Systemelemente. Diese sind der Grundkörper und der Gegenkörper, das auf sein Geräuschverhalten zu untersuchende Fluid sowie die Umgebungsbedingungen. Die Umgebungsbedingungen können unter anderem unterschiedliche Temperaturen und/oder atmosphärische Bedingungen umfassen.

Da die Prüfkette, insbesondere für Bremsflüssigkeiten in Fahrzeugbremssystemen, hohen Aufwand bei der Prüfung von neuen Bremsflüssigkeiten bzw. von neuen Formulierungen von Glykol-basierten Flüssigkeiten mit Additiven verursacht, ergibt sich ein Bedarf für ein vereinfachtes Prüfsystem, im Besonderen für eine Vorrichtung zur Bewertung des Geräuschverhaltens. Der Aufwand innerhalb der Prüfkette wird vor allem durch das Testen der Flüssigkeiten in kompletten Pumpen-Aggregaten verursacht.

Der Prüfaufwand steigt mit der Komplexität eines Aggregats und dessen geforderten Eigenschaften. Über diese Eigenschaften ergibt sich eine Parametervielfalt, die abzubilden ist, um den Realbetrieb, beispielsweise von Pumpenaggregaten in Kraftfahrzeugen, nachzustellen.

Der Fokus der vorliegenden Erfindung liegt auf einer Abstraktion des Einzelsystems mit einem Dichtelement des Pumpenaggregats. Eine Aufgabe der vorliegenden Erfindung ist es, ein Verfahren und eine Vorrichtung zur Bewertung eines Geräuschverhaltens eines Fluids bereitzustellen, welche die Bedingungen für eine Bremsflüssigkeit in den Dichtelementen eines Hauptbremszylinders abbilden. Im Besonderen sollen das Verfahren und die Vorrichtung der Quantifizierung des Geräuschverhaltens von Bremsflüssigkeiten dienen.

Diese Aufgabe wird erfindungsgemäß durch ein Verfahren zur Bewertung eines Geräuschverhaltens eines Fluids, insbesondere einer Bremsflüssigkeit, mit den Merkmalen des Anspruchs 1 gelöst. Vorteilhafte Ausgestaltungen und Weiterbildungen der Erfindung sind auch Gegenstand der Unteransprüche.

Entsprechend dem erfindungsgemäßen Verfahren wird ein Gegenkörper relativ zu einem Grundkörper bewegt, während sich das Fluid zwischen dem Gegenkörper und dem Grundkörper befindet. Der Gegenkörper wird dabei entlang einer Oberfläche des Grundkörpers bewegt und das Fluid dient als Schmiermittel.

Während der Bewegung des Gegenkörpers relativ zu dem Grundkörper wird eine Reibungskraft und/oder ein Reibwert zwischen dem Gegenkörper und dem Grundkörper in Abhängigkeit von einer Positionierung des Gegenkörpers relativ zu dem Grundkörper aufgenommen. Insbesondere wird dabei ein Verlauf der Reibungskraft und/oder des Reibwerts aufgenommen.

Die Reibungskraft sowie der Reibwert sind dabei in der Regel nicht konstant sondern unterliegen Schwankungen. Es wurde herausgefunden, dass die Schwankungen der Reibungskraft sowie des Reibwerts mit dem Geräuschverhalten des Fluids korrelieren und insbesondere ursächlich für eine Geräuschentwicklung sind. Daher wird aus der aufgenommenen Reibungskraft eine Reibungskraftschwankung und/oder aus dem aufgenommenen Reibwert eine Reibwertschwankung bestimmt.

Anschließend wird aus der zuvor bestimmten Reibungskraftschwankung und/oder aus der zuvor bestimmten Reibwertschwankung ein Schwankungsmittelwert berechnet.

Der so berechnete Schwankungsmittelwert ist ein Maß für eine Amplitude eines von dem Fluid erzeugten Geräuschs, also für die Lautstärke des Geräuschs. Mittels des Schwankungsmittelwerts kann somit eine Bewertung, insbesondere eine quantitative Bewertung, des Geräuschverhaltens des Fluids, durchgeführt werden.

Durch das erfindungsgemäße Verfahren ist die Prüfung von Fluiden, insbesondere von Flüssigkeiten wie Bremsflüssigkeiten, zur Bewertung des Geräuschverhaltens wesentlich erleichtert. Insbesondere ist eine Aufnahme und Auswertung von Schallwellen des durch das Fluid erzeugten Geräuschs nicht zwangsläufig erforderlich. Das Verfahren ist technisch einfach und kostengünstig durchführbar. Die Prüfkette einer Anwendung kann durch das erfindungsgemäße Verfahren vorteilhaft ergänzt und vereinfacht werden. Der erforderliche Prüfaufwand bei wesentlichen Einflussgrößen zum Auffinden einer geräuschunauffälligen Kombination aus Fluid und Werkstoffen kann durch das erfindungsgemäße Verfahren deutlich verringert werden.

Bei der Bewertung des Geräuschverhaltens von Flüssigkeiten wie Bremsflüssigkeiten mit dem erfindungsgemäßen Verfahren wurde eine annähernd eindeutige Übereinstimmung mit bekannten Praxisfällen erzielt. Bremsflüssigkeiten, welche mit dem erfindungsgemäßen Verfahren als auffällig und laut bewertet wurden, zeigten sich auch beim Einsatz in einem Serienfahrzeug messbar laut und auffällig.

Gemäß einer vorteilhaften Weiterbildung der Erfindung wird während der Bewegung des Gegenkörpers relativ zu dem Grundkörper eine Normalkraft auf den Gegenkörper aufgebracht, welche in Richtung auf den Grundkörper zu gerichtet ist. Die Normalkraft wirkt somit rechtwinklig zu der Richtung der Bewegung des Gegenkörpers relativ zu dem Grundkörper. Mittels der Normalkraft kann eine definierte Belastung zwischen Grundkörper und Gegenkörper aufgebracht werden. Idealerweise lässt sich dies Belastung dynamisch während eines Tests verändern um Geräuschentstehung und Dichtungsbelastung zu vergleichen. Dabei kann die Normalkraft in Stufen, beispielsweise beginnend bei 5 N und Intervallen von 2 Minuten um jeweils 5 N bis zu 20 N gesteigert werden. Für eine genauere Differenzierung kann die Belastung angepasst werden.

Vorteilhaft wird der Reibwert aus der Reibungskraft und der Normalkraft berechnet. Insbesondere wird der Reibwert als Quotient aus der Reibungskraft und der Normalkraft berechnet. Wenn während der Bewegung des Gegenkörpers relativ zu dem Grundkörper eine konstante Normalkraft aufgebracht wird, so ist der Reibwert proportional zu der Reibungskraft und damit verhältnismäßig einfach zu berechnen.

Die in einem tribologischen System obligatorische Relativbewegung und Belastung zwischen Grundkörper und Gegenkörper ist im Besonderen bei der Bewertung des Geräuschverhaltens der jeweiligen Anwendung anzupassen. Die Anwendung in einem Hauptbremszylinder eines Fahrzeugs setzt eine oszillierende Bewegung mit einem definiertem Hub und einer definierter Frequenz voraus.

Gemäß einer bevorzugten Weiterbildung der Erfindung wird daher der Gegenkörper relativ zu dem Grundkörper oszillierend bewegt. Insbesondere wird der Gegenkörper dabei translatorisch bewegt.

Gemäß einer vorteilhaften Ausgestaltung der Erfindung werden die Reibungskraft und/oder der Reibwert zwischen dem Gegenkörper und dem Grundkörper während eines vollständigen Zyklus dieser oszillierenden Bewegung aufgenommen. Der Gegenkörper befindet sich dabei am Anfang des Zyklus in der gleichen Positionierung relativ zu dem Grundkörper wie am Ende des Zyklus. Dadurch kann das Geräuschverhalten des Fluids verhältnismäßig genau bewertet werden, wobei die Menge der aufgenommenen Daten und der erforderlich Aufwand zur Berechnung des Schwankungsmittelwerts verhältnismäßig gering sind.

Gemäß einer anderen vorteilhaften Ausgestaltung der Erfindung werden die Reibungskraft und/oder der Reibwert zwischen dem Gegenkörper und dem Grundkörper während mehrerer Zyklen dieser oszillierenden Bewegung aufgenommen. Der Gegenkörper befindet sich dabei am Anfang der Zyklen bevorzugt in der gleichen Positionierung relativ zu dem Grundkörper wie am Ende der Zyklen. Durch die Aufnahme einer größeren Menge von Daten und Erhöhung des Aufwands zur Berechnung des Schwankungsmittelwerts kann das Geräuschverhalten des Fluids noch genauer bewertet werden.

Gemäß einer Ausführungsform der Erfindung werden zu der Reibungskraft und/oder zu dem Reibwert eine obere Einhüllende und eine untere Einhüllende berechnet. Die obere Einhüllende und die untere Einhüllende sind Kurven, welche bei einer graphischen Darstellung den Verlauf der Reibungskraft und/oder des Reibwerts einhüllen.

Aus einer Differenz zwischen der oberen Einhüllenden und der unteren Einhüllenden wird dann die Reibungskraftschwankung und/oder die Reibwertschwankung bestimmt. Die obere Einhüllende ist dabei stets größer als die untere Einhüllende. Somit ist die Differenz zwischen der oberen Einhüllenden und der unteren Einhüllenden stets positiv.

Gemäß einer anderen möglichen Ausführungsform der Erfindung wird zu der Reibungskraft und/oder zu dem Reibwert ein gleitender Mittelwert berechnet.

Der gleitende Mittelwert ist eine Kurve, um welche bei einer graphischen Darstellung der Verlauf der Reibungskraft und/oder des Reibwerts oszilliert. Der als y(n) bezeichnete gleitende Mittelwert entspricht vorliegend einem Mittelwert in einem Fenster mit einer definierten Breite, beispielsweise 50 Messwerte, welche als windowSize bezeichnet wird. Der Index n läuft über die Anzahl der Messwerte in dem Messwertevektor x.

$$y(n) = \frac{1}{windowSize}\left(x(n) + x(n-1) + ... + x(n-(windowSize-1))\right).$$

Aus einem Abstand der Reibungskraft und/oder des Reibwerts zu dem gleitenden Mittelwert werden dann die Reibungskraftschwankung und/oder die Reibwertschwankung bestimmt. Der Abstand der Reibungskraft und/oder des Reibwerts zu dem gleitenden Mittelwert kann beispielsweise als Betrag der Differenz zwischen der Reibungskraft und/oder dem Reibwert zu dem gleitenden Mittelwert berechnet werden. Der Abstand der Reibungskraft und/oder des Reibwerts zu dem gleitenden Mittelwert kann beispielsweise auch als Quadrat der Differenz zwischen der Reibungskraft und/oder dem Reibwert zu dem gleitenden Mittelwert berechnet werden. Somit ist die Differenz zwischen der Reibungskraft und/oder dem Reibwert zu dem gleitenden Mittelwert stets positiv.

Vorzugsweise ist der Gegenkörper kreiszylindrisch ausgestaltet und weist eine Mittelachse auf, um welche der Gegenkörper rotationssymmetrisch ist. Vorzugsweise weist der Grundkörper eine ebene Fläche auf. Dabei wird der Gegenkörper rechtwinklig zu der Mittelachse und parallel zu der ebenen Fläche des Grundkörpers bewegt, wobei die Mittelachse des Gegenkörpers parallel zu der ebenen Fläche des Grundkörpers verläuft. Insbesondere wird der Gegenkörper dabei translatorisch bewegt, wobei keine Rotation um die Mittelachse erfolgt.

Zusätzlich wird eine akustische Tonaufnahme während der Bewegung des Gegenkörpers relativ zu dem Grundkörper in der Nähe des Kontaktes zwischen Grundkörper und Gegenkörper durchgeführt. Insbesondere wird durch die Tonaufnahme das entstehende Geräusch über mehrere Zyklen der Bewegung, beziehungsweise über einen bestimmten Zeitraum, aufgenommen.

Das hier beschriebene erfindungsgemäße Verfahren findet vorteilhaft Verwendung zur Bewertung des Geräuschverhaltens einer (hoch)viskosen Flüssigkeit, insbesondere einer Bremsflüssigkeit. Insbesondere kann das Geräuschverhalten der Bremsflüssigkeit in einem Bremszylinder eines Fahrzeugs, speziell eines Kraftfahrzeugs, bewertet werden.

Die Aufgabe wird erfindungsgemäß auch durch eine Vorrichtung zur Bewertung eines Geräuschverhaltens eines Fluids, insbesondere einer Bremsflüssigkeit, mit den Merkmalen der Ansprüche gelöst. Vorteilhafte Ausgestaltungen und Weiterbildungen der Erfindung sind Gegenstand der Unteransprüche.

Die erfindungsgemäße Vorrichtung umfasst einen Grundkörper und einen Gegenkörper, welcher relativ zu dem Grundkörper bewegbar ist, während sich das Fluid zwischen dem Gegenkörper und dem Grundkörper befindet. Der Gegenkörper ist dabei entlang einer Oberfläche des Grundkörpers bewegbar und das Fluid dient bei einer solchen Bewegung als Schmiermittel.

Zum Ausführen der Bewegung des Gegenkörpers relativ zu dem Grundkörper umfasst die Vorrichtung ein Antriebssystem, mit welchem insbesondere eine translatorisch oszillierende Bewegung möglich ist. Das Antriebssystem dient auch dazu, die elastische Nachgiebigkeit des Systems der praktischen Anwendung, beispielsweise in einen Bremszylinder, möglichst nachzubilden. Im Besonderen kann das Antriebssystem hierzu ein Schwingspulenantrieb zur Nachbildung der Antriebsbewegung aufweisen.

Die erfindungsgemäße Vorrichtung umfasst ferner (mindestens) eine Aufnahmeeinheit zur Aufnahme einer Reibungskraft und/oder eines Reibwerts zwischen dem Gegenkörper und dem Grundkörper in Abhängigkeit von einer Positionierung des Gegenkörpers relativ zu dem Grundkörper. Mittels der Aufnahmeeinheit kann insbesondere ein Verlauf der Reibungskraft und/oder des Reibwerts aufgenommen werden. Die Aufnahmeeinheit gestattet eine hochaufgelöste Datenaufzeichnung der Bewegungsamplitude und der Reibungskraft zwischen dem Grundkörper und dem Gegenkörper.

Die erfindungsgemäße Vorrichtung umfasst vorzugsweise ferner eine Recheneinheit zur Bestimmung einer Reibungskraftschwankung aus der Reibungskraft und/oder einer Reibwertschwankung aus dem Reibwert. Die Recheneinheit dient auch zur Berechnung eines Schwankungsmittelwerts aus der Reibungskraftschwankung und/oder aus der Reibwertschwankung.

Mit Hilfe der erfindungsgemäßen Vorrichtung kann für die Fluidentwicklung vorab eine Geräuschauffälligkeit mit einfachen Mitteln identifiziert werden. Die erfindungsgemäße Vorrichtung ist einfach und kostengünstig herzustellen und auf mindestens jeder Prüfmaschine nutzbar, welche in der DIN 51384 beschrieben ist.

Generell soll ein Gegenkörper zur Anwendung kommen, welcher eine zylindrische Form hat und quer zu seiner Zylinderachse bewegt wird. Die Gründe hierfür sind in dem Lehrbuch "Contact Mechanics", Cambridge University Press, 1985 beschrieben. Im einfachsten Fall kann der Gegenkörper als O-Ring-Schnur oder Segment aus einem O-Ringen ausgestaltet sein und jeweils einen kontaktmechanisch sinnvollen Durchmesser aufweisen. Mit diesen leicht herstellbaren Geometrien kann das Gegenkörpermaterial aus einer Anwendung einfach im Prüfsystem genutzt werden.

Vorzugsweise ist der Gegenkörper kreiszylindrisch ausgestaltet und weist eine Mittelachse auf, um welche der Gegenkörper rotationssymmetrisch ist. Vorzugsweise weist der Grundkörper eine ebene Fläche auf. Dabei ist der Gegenkörper rechtwinklig zu der Mittelachse und parallel zu der ebenen Fläche des Grundkörpers bewegbar, wobei die Mittelachse des Gegenkörpers parallel zu der ebenen Fläche des Grundkörpers verläuft. Insbesondere erfolgt die Bewegung des Gegenkörpers dabei translatorisch und ohne Rotation um die Mittelachse.

Bevorzugt ist der Gegenkörper aus einem Elastomer gefertigt, und der Grundkörper ist aus einem Metall gefertigt. Die Empfindlichkeit der Vorrichtung kann unter anderem durch die Beschaffenheit der Metalloberfläche des Grundkörpers eingestellt werden. Die Oberfläche des Grundkörpers sollte für eine sichere Korrelation mit dem System der praktischen Anwendung, beispielsweise einen Bremszylinder, angepasst werden.

Die hier beschriebene erfindungsgemäße Vorrichtung findet vorteilhaft Verwendung zur Bewertung des Geräuschverhaltens einer viskosen Flüssigkeit, insbesondere Bremsflüssigkeit. Insbesondere kann das Geräuschverhalten der Bremsflüssigkeit in einem Bremszylinder eines Fahrzeugs, speziell eines Kraftfahrzeugs, bewertet werden.

Figuren und Ausführungsformen der Erfindung

Im Folgenden ist die Erfindung anhand eines in den Figuren dargestellten vorteilhaften Ausführungsbeispiels näher erläutert. Die Erfindung wird ferner in den Ansprüchen präzisiert.

Es zeigen:

Figur 1:    eine schematische teilgeschnittene Darstellung einer Vorrichtung zur Bewertung eines Geräuschverhaltens eines Fluids;

Figur 2:    eine graphische Darstellung eines Reibwerts eines Fluids in Abhängigkeit von der Positionierung;

Figur 3:    eine graphische Darstellung des Reibwerts aus Figur 2 mit Einhüllenden;

Figur 4:    eine graphische Darstellung einer Reibwertschwankung als Differenz zwischen den Einhüllenden aus Figur 3;

Figur 5:    eine graphische Darstellung des Reibwerts aus Figur 2 mit gleitendem Mittelwert;

Figur 6:    eine graphische Darstellung einer Reibwertschwankung als Abstand zu dem gleitendem Mittelwert aus Figur 5 und

Figur 7:    eine graphische Darstellung eines Reibwerts eines anderen Fluids in Abhängigkeit von der Positionierung;

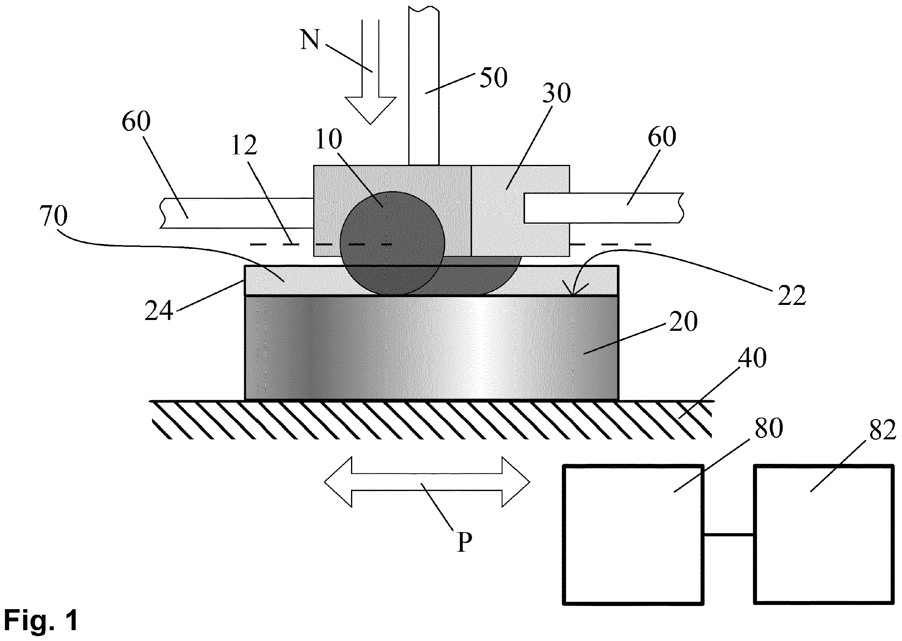

In Figur 1 ist eine Vorrichtung zur Bewertung eines Geräuschverhaltens eines Fluids 70 schematisch dargestellt. Die Vorrichtung umfasst einen Grundkörper 20, welcher auf einer Plattform 40 befestigt ist. Der Grundkörper 20 ist dabei geschnitten dargestellt. Die Vorrichtung umfasst auch einen Gegenkörper 10, welcher relativ zu einem Grundkörper 20 bewegbar ist. In einem Raum zwischen dem Grundkörper 20 und dem Gegenkörper 10 befindet sich das zu bewertende Fluid 70 in einer ausreichenden Menge. Bei dem Fluid handelt es sich vorliegend um eine Bremsflüssigkeit. Die Plattform 40 lässt sich temperieren um Praxisanwendungen bei höheren oder tieferen Temperaturen nachzubilden.

Der Grundkörper 20 ist aus einem Metall gefertigt und weist annähernd die Form einer Kreisscheibe auf. Auf einer der Plattform 40 abgewandten Seite weist der Grundkörper 20 eine ebene Fläche 22 auf. Die ebene Fläche 22 ist vorliegend von einer umlaufenden Erhöhung 24 umgeben. Die Erhöhung 24 bildet zusammen mit der ebenen Fläche 22 eine wannenähnliche Vertiefung des Grundkörpers 20, welche zur Aufnahme des zu bewertenden Fluids 70 dient. Die Erhöhung 24 des Grundkörpers 20 kann auch entfallen, insbesondere wenn eine Tropfenbenetzung der ebenen Fläche 22 mit dem zu bewertenden Fluid 70 ausreichend ist.

Der Gegenkörper 10 ist aus einem Elastomer gefertigt und als Stück aus einem Schnurmaterial ausgeführt. Der Gegenkörper 10 ist kreiszylindrisch ausgestaltet und weist eine Mittelachse 12 auf. Die Mittelachse 12 des Gegenkörpers 10 verläuft parallel zu der ebenen Fläche 22 des Grundkörpers 20. Der Gegenkörper 10 ragt in die wannenähnliche Vertiefung des Grundkörpers 20 hinein und steht dabei in Kontakt mit dem dort befindlichen Fluid 70.

Der Gegenkörper 10 ist in eine Halterung 30 fest eingespannt. Unter anderem verhindert die Halterung 30 eine Rotation des Gegenkörpers 10 um seine Mittelachse 12. An der Halterung 30 ist eine Kopplungsstrebe 50 angebracht. Die Kopplungsstrebe 50 ist vorliegend ein zylindrischer Stab und ragt auf einer dem Grundkörper 20 abgewandten Seite von der Halterung 30 weg. Die Kopplungsstrebe 50 dient zum Aufbringen einer Normalkraft N auf den Gegenkörper 10. Die Normalkraft N ist dabei auf den Grundkörper 20 zu gerichtet und steht rechtwinklig auf der ebenen Fläche 22 des Grundkörpers 20. Die Normalkraft N steht somit rechtwinklig zu der Mittelachse 12 des Gegenkörpers 10.

Ein hier nicht dargestelltes Kraftmesssystem misst die Normalkraft N und erlaubt dabei eine Rückkopplung für einen Regelkreis. Somit kann die Normalkraft N wiederholbar abgebildet und nachgeführt werden. Die Nachführung ist insbesondere bei relaxierenden Elastomermaterialien des Gegenkörpers 10 erforderlich.

Die Halterung 30 ist ferner mit einem Antriebssystem 60 verbunden. Das Antriebssystem 60 umfasst vorliegend zwei zylindrische Stäbe, welche mittels je einer hier nicht dargestellten Kupplung mit der Halterung 30 verbunden sind. Das Antriebssystem 60 ermöglicht eine Bewegung der Halterung 30 in eine Richtung rechtwinklig zu der Mittelachse 12 des Gegenkörpers 10 und parallel zu der ebenen Fläche 22 des Grundkörpers 20. Somit ist auch der Gegenkörper 10 rechtwinklig zu seiner Mittelachse M und parallel zu der ebenen Fläche 22 des Grundkörpers 20 bewegbar.

Das Antriebssystem 60 umfasst auch eine hier nicht dargestellte elektrodynamische Schwingspule und ermöglicht insbesondere eine translatorische oszillierende Bewegung des Gegenkörpers 10 relativ zu dem Grundkörper 20. Auch ein Exzenterantrieb sowie ein Kurbelantrieb sind denkbar. Das Antriebssystem 60 umfasst ferner ein hier nicht dargestelltes Wegmesssystem, mittels welchem eine Positionierung P des Gegenkörpers 10 relativ zu dem Grundkörper 20 aufgenommen werden kann. Dabei führt das Antriebssystem 60 vorliegend einen Hub von 3 mm bei einer Frequenz von 2 Hz aus.

Bei einer Bewegung des Gegenkörpers 10 relativ zu dem Grundkörper 20 entsteht eine Reibungskraft RK. Die Plattform 40 umfasst hier nicht dargestellte Sensoren zur Messung der Reibungskraft RK. Die Sensoren zur Messung der Reibungskraft RK sind an eine Aufnahmeeinheit 80 angeschlossen. Die Aufnahmeeinheit 80 ist ferner mit dem Wegmesssystem des Antriebssystems 60 und mit dem Kraftmesssystem für die Normalkraft N verbunden.

Messwerte der Reibungskraft RK, Messwerte der Positionierung P und Messwerte der Normalkraft N werden zeitsynchron zu der Aufnahmeeinheit 60 übertragen. Die Messwerte der Reibungskraft RK sind dabei richtungsabhängig und je nach Richtung der Reibungskraft RK positiv oder negativ.

Aus Messwerten der Reibungskraft RK und Messwerten der Normalkraft N kann ein Reibwert RW als Quotient berechnet werden. Es gilt:

$$RW = RK \, / \, N$$

Die Aufnahmeeinheit 80 dient zur Aufnahme der Reibungskraft RK und/oder des Reibwerts RW zwischen dem Gegenkörper 10 und dem Grundkörper 20 in Abhängigkeit von der Positionierung P des Gegenkörpers 10 relativ zu dem Grundkörper 20. Die Aufnahmeeinheit 80 nimmt insbesondere synchrone Messwerte der Reibungskraft RK, der Normalkraft N und der Positionierung P auf.

Die Aufnahmeeinheit 80 ist mit einer Recheneinheit 82 verbunden. Die Recheneinheit 82 dient zur Bestimmung einer Reibungskraftschwankung RKS aus der Reibungskraft RK sowie zur Bestimmung einer Reibwertschwankung RWS aus dem Reibwert RW. Ferner dient die Recheneinheit 82 zur Berechnung eines Schwankungsmittelwerts SM aus der Reibungskraftschwankung RKS sowie aus der Reibwertschwankung RWS.

Bei der Ausführung des Verfahrens wird der Gegenkörper 10 relativ zu dem Grundkörper bewegt, während sich das Fluid 70 zwischen dem Gegenkörper 10 und dem Grundkörper 20 befindet. Der Gegenkörper wird dabei 10 translatorisch oszillierend rechtwinklig zu seiner Mittelachse 12 und parallel zu der ebenen Fläche 22 des Grundkörpers 20 bewegt, wobei seine Mittelachse 12 parallel zu der ebenen Fläche 22 verläuft. Während dieser Bewegung des Gegenkörpers 10 relativ zu dem Grundkörper 20 wird eine Normalkraft N auf den Gegenkörper 10 aufgebracht, welche in Richtung auf den Grundkörper 20 zu gerichtet ist und rechtwinklig auf der ebenen Fläche 22 steht.

Während der Bewegung des Gegenkörpers 10 relativ zu dem Grundkörper wird eine Reibungskraft RK zwischen dem Gegenkörper 10 und dem Grundkörper 20 in Abhängigkeit von der Positionierung P des Gegenkörpers 10 relativ zu dem Grundkörper 20 zeitsynchron aufgenommen. Die Reibungskraft RK zwischen dem Gegenkörper 10 und dem Grundkörper 20 wird vorliegend während eines vollständigen Zyklus der oszillierenden Bewegung aufgenommen.

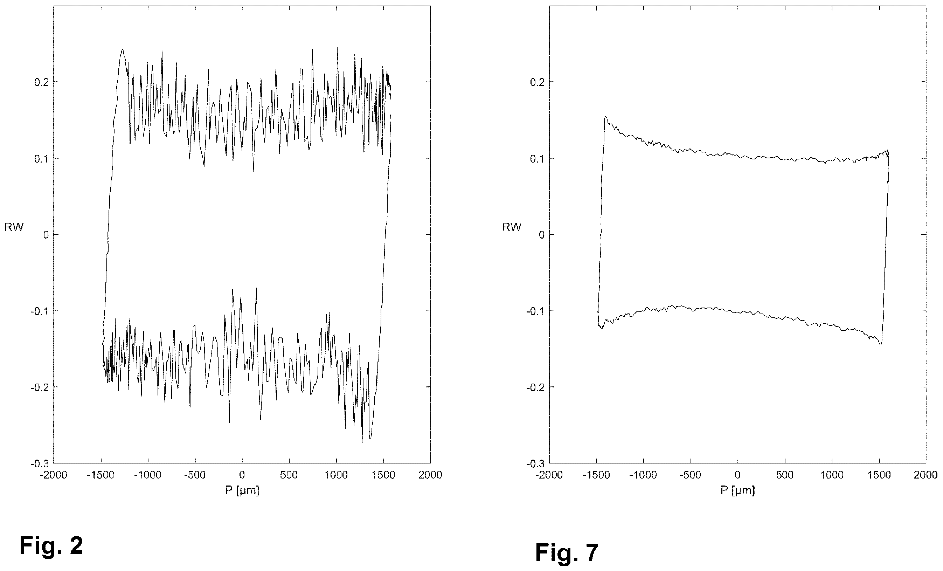

Aus der Reibungskraft RK und der Normalkraft N wird der Reibwert RW als Quotient berechnet. Bei einer konstanten Normalkraft N ist der Reibwert RW direkt proportional zu der Reibungskraft RK. Figur 2 zeigt eine graphische Darstellung des Reibwerts RK des Fluids 70 in Abhängigkeit von der Positionierung P während eines vollständigen Zyklus. Je nach Richtung der Reibungskraft RK ist der Reibwert RW positiv oder negativ aufgetragen.

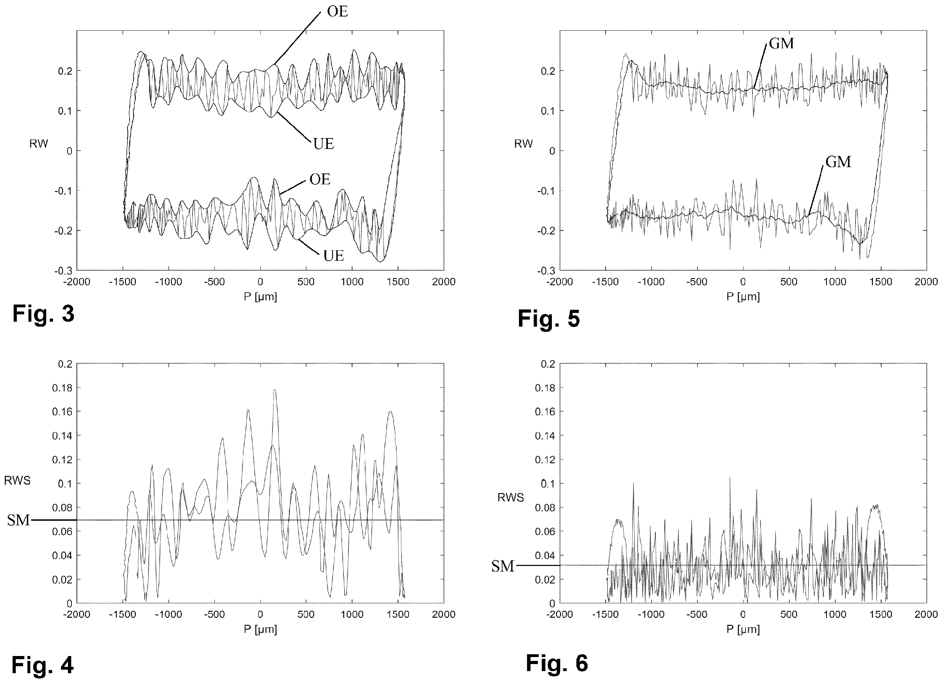

Gemäß einer ersten Variante des Verfahrens werden zu dem Reibwert RW eine obere Einhüllende OE und eine untere Einhüllende UE berechnet. Figur 3 zeigt eine graphische Darstellung des Reibwerts RK aus Figur 2 mit der oberen Einhüllenden OE und der unteren Einhüllenden UE. Alternativ oder zusätzlich können auch eine obere Einhüllende OE und eine untere Einhüllende UE zu der Reibungskraft RK berechnet werden.

Aus einer Differenz zwischen der oberen Einhüllenden OE und der unteren Einhüllenden UE des Reibwert RW wird anschließend eine Reibwertschwankung RWS bestimmt. Figur 4 zeigt eine graphische Darstellung der Reibwertschwankung RW als Differenz zwischen den der oberen Einhüllenden OE und der unteren Einhüllenden UE aus Figur 3.

Alternativ oder zusätzlich kann aus einer Differenz zwischen der oberen Einhüllenden OE und der unteren Einhüllenden UE der Reibungskraft RK auch eine Reibungskraftschwankung RKS bestimmt werden.

Anschließend wird aus der Reibwertschwankung RWS und/oder aus der Reibungskraftschwankung RKS ein Schwankungsmittelwert (SM) berechnet. Der aus der Reibwertschwankung RWS berechnete Schwankungsmittelwert SM ist in Figur 4 auch dargestellt. Der nach der ersten Variante berechnete Schwankungsmittelwert SM für das Fluid 70 hat vorliegend einen Zahlenwert von etwa 0,07.

Gemäß einer zweiten Variante des Verfahrens wird zu dem Reibwert RW ein gleitender Mittelwert GM berechnet. Figur 5 zeigt eine graphische Darstellung des Reibwerts RK aus Figur 2 mit gleitendem Mittelwert GM. Alternativ oder zusätzlich kann auch ein gleitender Mittelwert GM zu der Reibungskraft RK berechnet werden.

Aus einem Abstand des Reibwerts RW zu dem gleitenden Mittelwert GM wird anschließend eine Reibwertschwankung RWS bestimmt. Figur 6 zeigt eine graphische Darstellung der Reibwertschwankung RW als Abstand zu dem gleitenden Mittelwert GM aus Figur 5. Alternativ oder zusätzlich kann aus einem Abstand der Reibungskraft RK zu dem gleitenden Mittelwert GM auch eine Reibungskraftschwankung RKS bestimmt werden.

Anschließend wird aus der Reibwertschwankung RWS und/oder aus der Reibungskraftschwankung RKS ein Schwankungsmittelwert SM berechnet. Der aus der Reibwertschwankung RWS berechnete Schwankungsmittelwert SM ist in Figur 6 auch dargestellt. Der nach der zweiten Variante berechnete Schwankungsmittelwert SM für das Fluid 70 hat vorliegend einen Zahlenwert von etwa 0,03.

Die Reibungskraft RK kann auch während mehrerer Zyklen der oszillierenden Bewegung aufgenommen werden. Dabei wird für jeden Zyklus ein temporärer Schwankungsmittelwert SM berechnet, und aus den temporären Schwankungsmittelwerten SM wird, insbesondere durch Mittelung, ein gesamter Schwankungsmittelwert SM berechnet.

Figur 7 zeigt eine graphische Darstellung des Reibwerts RK eines anderen Fluids 70 in Abhängigkeit von der Positionierung P während eines vollständigen Zyklus. Aus einem optischen Vergleich zwischen Figur 2 und Figur 7 ist bereits erkennbar, dass das andere Fluid 70 einen geringeren Schwankungsmittelwert SM besitzt.

Parallel zu der Aufnahme der Reibungskraft RK, der Bestimmung der Reibwertschwankung RWS und der Berechnung des Schwankungsmittelwerts SM kann eine akustische Tonaufnahme durchgeführt werden. Es zeigt sich, dass die akustische Tonaufnahme des Geräuschverhaltens des Fluids 70 mit dem berechneten Schwankungsmittelwert SM korreliert. Der berechnete Schwankungsmittelwert SM ist also ein Maß für eine Amplitude des von dem Fluid 70 erzeugten Geräuschs. Je größer der Schwankungsmittelwert SM ist, umso höher ist die Lautstärke dieses Geräuschs.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

**Bezugszeichenliste**

10 Gegenkörper
12 Mittelachse
20 Grundkörper
22 ebene Fläche
24 Erhöhung
30 Halterung

40 Plattform
50 Kopplungsstrebe
60 Antriebssystem
70 Fluid
80 Aufnahmeeinheit
82 Recheneinheit

P Positionierung
RK Reibungskraft
RW Reibwert
RKS Reibungskraftschwankung
RWS Reibwertschwankung
SM Schwankungsmittelwert
N Normalkraft
OE obere Einhüllende
UE untere Einhüllende
GM gleitender Mittelwert

**Patentansprüche**

1. Verfahren zur Bewertung eines Geräuschverhaltens eines Fluids (70), wobei ein Gegenkörper (10) relativ zu einem Grundkörper (20) bewegt wird während sich das Fluid (70) zwischen dem Gegenkörper (10) und dem Grundkörper (20) befindet; und während der Bewegung eine Reibungskraft (RK) und/oder ein Reibwert (RW) zwischen dem Gegenkörper (10) und dem Grundkörper (20) in Abhängigkeit von einer Positionierung (P) des Gegenkörpers (10) relativ zu dem Grundkörper (20) aufgenommen wird; **dadurch gekennzeichnet, dass** aus der Reibungskraft (RK) eine Reibungskraftschwankung (RKS) und/oder aus dem Reibwert (RW) eine Reibwertschwankung (RWS) bestimmt wird; und aus der Reibungskraftschwankung (RKS) und/oder aus der Reibwertschwankung (RWS) ein Schwankungsmittelwert (SM) berechnet wird.

2. Verfahren nach Anspruch 1, wobei während der Bewegung des Gegenkörpers (10) relativ zu dem Grundkörper (20) eine Normalkraft (N) auf den Gegenkörper (10) aufgebracht wird, welche in Richtung auf den Grundkörper (20) zu gerichtet ist.

3. Verfahren nach Anspruch 2, wobei der Reibwert (RW) aus der Reibungskraft (RK) und der Normalkraft (N) berechnet wird.

4. Verfahren nach einem der vorstehenden Ansprüche, wobei der Gegenkörper (10) relativ zu dem Grundkörper (20) oszillierend bewegt wird.

5. Verfahren nach Anspruch 4, wobei die Reibungskraft (RK) und/oder der Reibwert (RW) zwischen dem Gegenkörper (10) und dem Grundkörper (20) während eines vollständigen Zyklus der oszillierenden Bewegung aufgenommen wird.

6. Verfahren nach Anspruch 4, wobei die Reibungskraft (RK) und/oder der Reibwert (RW) zwischen dem Gegenkörper (10) und dem Grundkörper (20) während mehrerer Zyklen der oszillierenden Bewegung aufgenommen wird.

7. Verfahren nach einem der vorstehenden Ansprüche, wobei zu der Reibungskraft (RK) und/oder zu dem Reibwert (RW) eine obere Einhüllende (OE) und eine untere Einhüllende (UE) berechnet werden, und aus einer Differenz zwischen der oberen Einhüllenden (OE) und der unteren Einhüllenden (UE) die Reibungskraftschwankung (RKS) und/oder die Reibwertschwankung (RWS) bestimmt wird.

8. Verfahren nach einem der Ansprüche 1 bis 6, wobei zu der Reibungskraft (RK) und/oder zu dem Reibwert (RW) ein gleitender Mittelwert (GM) berechnet wird, und aus einem Abstand der Reibungskraft (RK) und/oder des Reibwerts (RW) zu dem gleitenden Mittelwert (GM) die Reibungskraftschwankung (RKS) und/oder die Reibwertschwankung (RWS) bestimmt wird.

9. Verfahren nach einem der vorstehenden Ansprüche, wobei der Gegenkörper (10) kreiszylindrisch ausgestaltet ist und eine Mittelachse (12) aufweist, und der Grundkörper (20) eine ebene Fläche (22) aufweist, wobei der Gegenkörper (10) rechtwinklig zu der Mittelachse (12) und parallel zu der ebenen Fläche (22) des Grundkörpers (20) bewegt wird, wobei die Mittelachse (12) parallel zu der ebenen Fläche (22) verläuft.

**10.** Verfahren nach einem der vorstehenden Ansprüche, wobei während der Bewegung des Gegenkörpers (10) relativ zu dem Grundkörper (20) zusätzlich eine Tonaufnahme durchgeführt wird.

**11.** Verfahren nach einem der vorstehenden Ansprüche zur Bewertung des Geräuschverhaltens einer Bremsflüssigkeit.

**12.** Vorrichtung zur Bewertung eines Geräuschverhaltens eines Fluids (70), umfassend einen Gegenkörper (10), welcher relativ zu einem Grundkörper (20) bewegbar ist, während sich das Fluid (70) zwischen dem Gegenkörper (10) und dem Grundkörper (20) befindet; ein Antriebssystem (60) zum Ausführen der Bewegung des Gegenkörpers (10) relativ zu dem Grundkörper (20); und eine Aufnahmeeinheit (80) zur Aufnahme einer Reibungskraft (RK) und/oder eines Reibwerts (RW) zwischen dem Gegenkörper (10) und dem Grundkörper (20) in Abhängigkeit von einer Positionierung (P) des Gegenkörpers (10) relativ zu dem Grundkörper (20), **dadurch gekennzeichnet, dass** die Vorrichtung ein Recheneinheit (82) zur Bestimmung einer Reibungskraftschwankung (RKS) aus der Reibungskraft (RK) und/oder einer Reibwertschwankung (RWS) aus dem Reibwert (RW), sowie zur Berechnung eines Schwankungsmittelwerts (SM) aus der Reibungskraftschwankung (RKS) und/oder aus der Reibwertschwankung (RWS) umfasst.

**13.** Vorrichtung nach Anspruch 12, wobei der Gegenkörper (10) kreiszylindrisch ausgestaltet ist und eine Mittelachse (12) aufweist, und der Grundkörper (20) eine ebene Fläche (22) aufweist, wobei der Gegenkörper (10) rechtwinklig zu der Mittelachse (M) und parallel zu der ebenen Fläche (22) des Grundkörpers (20) bewegbar ist, wobei die Mittelachse (12) parallel zu der ebenen Fläche (22) verläuft.

**14.** Vorrichtung nach einem der Ansprüche 12 bis 13, wobei der Gegenkörper (10) aus einem Elastomer gefertigt ist, und der Grundkörper (20) aus einem Metall gefertigt ist.

## Claims

**1.** Method for evaluating acoustic properties of a fluid (70), wherein an opposing body (10) is moved in relation to a main body (20) while the fluid (70) is between the opposing body (10) and the main body (20); and during the movement a friction force (RK) and/or a friction coefficient (RW) between the opposing body (10) and the main body (20) is recorded in dependence on a positioning (P) of the opposing body (10) in relation to the main body (20); **characterized in that** a friction force fluctuation (RKS) is determined from the friction force (RK) and/or a friction coefficient fluctuation (RWS) is determined from the friction coefficient (RW); and a mean fluctuation value (SM) is calculated from the friction force fluctuation (RKS) and/or from the friction coefficient fluctuation (RWS).

**2.** Method according to Claim 1, wherein during the movement of the opposing body (10) in relation to the main body (20) a normal force (N), which is directed in the direction towards the main body (20), is applied to the opposing body (10).

**3.** Method according to Claim 2, wherein the friction coefficient (RW) is calculated from the friction force (RK) and the normal force (N).

**4.** Method according to one of the preceding claims, wherein the opposing body (10) is moved in an oscillating manner in relation to the main body (20).

**5.** Method according to Claim 4, wherein the friction force (RK) and/or the friction coefficient (RW) between the opposing body (10) and the main body (20) is recorded during one complete cycle of the oscillating movement.

**6.** Method according to Claim 4, wherein the friction force (RK) and/or the friction coefficient (RW) between the opposing body (10) and the main body (20) is recorded during a number of cycles of the oscillating movement.

**7.** Method according to one of the preceding claims, wherein an upper envelope (OE) and a lower envelope (UE) are calculated in relation to the friction force (RK) and/or in relation to the friction coefficient (RW), and the friction force fluctuation (RKS) and/or the friction coefficient fluctuation (RWS) is determined from the difference between the upper envelope (OE) and the lower envelope (UE).

8. Method according to one of Claims 1 to 6, wherein a floating mean value (GM) is calculated in relation to the friction force (RK) and/or in relation to the friction coefficient (RW), and the friction force fluctuation (RKS) and/or the friction coefficient fluctuation (RWS) is determined from the difference between the friction force (RK) and/or the friction coefficient (RW) and the floating mean value (GM).

9. Method according to one of the preceding claims, wherein the opposing body (10) is of a circular-cylindrical design and has a centre axis (12), and the main body (20) has a planar surface (22), wherein the opposing body (10) is moved at right angles to the centre axis (12) and parallel to the planar surface (22) of the main body (20), wherein the centre axis (12) runs parallel to the planar surface (22).

10. Method according to one of the preceding claims, wherein during the movement of the opposing body (10) in relation to the main body (20) a sound recording is additionally carried out.

11. Method according to one of the preceding claims for evaluating the acoustic properties of a brake fluid.

12. Device for evaluating acoustic properties of a fluid (70), comprising an opposing body (10), which is movable in relation to a main body (20) while the fluid (70) is between the opposing body (10) and the main body (20); a drive system (60) for performing the movement of the opposing body (10) in relation to the main body (20); and a recording unit (80) for recording a friction force (RK) and/or a friction coefficient (RW) between the opposing body (10) and the main body (20) in dependence on a positioning (P) of the opposing body (10) in relation to the main body (20), **characterized in that** the device comprises a computing unit (82) for determining a friction force fluctuation (RKS) from the friction force (RK) and/or a friction coefficient fluctuation (RWS) from the friction coefficient (RW), and also for calculating a mean fluctuation value (SM) from the friction force fluctuation (RKS) and/or on the friction coefficient fluctuation (RWS).

13. Device according to Claim 12, wherein the opposing body (10) is of a circular-cylindrical design and has a centre axis (12), and the main body (20) has a planar surface (22), wherein the opposing body (10) is movable at right angles to the centre axis (M) and parallel to the planar surface (22) of the main body (20), wherein the centre axis (12) runs parallel to the planar surface (22) .

14. Device according to either of Claims 12 and 13, wherein the opposing body (10) is produced from an elastomer, and the main body (20) is produced from a metal.

**Revendications**

1. Procédé d'évaluation du comportement acoustique d'un fluide (70), un corps antagoniste (10) étant déplacé par rapport à un corps de base (20) alors que le fluide (70) se trouve entre le corps antagoniste (10) et le corps de base (20) ; et pendant le mouvement, une force de frottement (RK) et/ou un coefficient de frottement (RW) entre le corps antagoniste (10) et le corps de base (20) étant enregistré en fonction d'un positionnement (P) du corps antagoniste (10) par rapport au corps de base (20) ; **caractérisé en ce qu'**une fluctuation (RKS) de la force de frottement est déterminée à partir de la force de frottement (RK) et/ou une fluctuation (RWS) du coefficient de frottement est déterminée à partir du coefficient de frottement (RW) ; et une valeur de fluctuation moyenne (SM) est calculée à partir de la fluctuation (RKS) de la force de frottement et/ou à partir de la fluctuation (RWS) du coefficient de frottement.

2. Procédé selon la revendication 1, pendant le mouvement du corps antagoniste (10) par rapport au corps de base (20), une force normale (N), qui est dirigée vers le corps de base (20), étant appliquée sur le corps antagoniste (10).

3. Procédé selon la revendication 2, le coefficient de frottement (RW) étant calculé à partir de la force de frottement (RK) et de la force normale (N).

4. Procédé selon l'une des revendications précédentes, le corps antagoniste (10) étant déplacé de manière oscillante par rapport au corps de base (20).

5. Procédé selon la revendication 4, la force de frottement (RK) et/ou le coefficient de frottement (RW) entre le corps antagoniste (10) et le corps de base (20) étant enregistrées pendant un cycle complet du mouvement oscillant.

**6.** Procédé selon la revendication 4, la force de frottement (RK) et/ou le coefficient de frottement (RW) entre le corps antagoniste (10) et le corps de base (20) étant enregistrées pendant plusieurs cycles du mouvement oscillant.

**7.** Procédé selon l'une des revendications précédentes, une enveloppe supérieure (OE) et une enveloppe inférieure (UE) étant calculées pour la force de frottement (RK) et/ou le coefficient de frottement (RW), et la fluctuation (RKS) de la force de frottement et/ou la fluctuation (RWS) du coefficient de frottement étant déterminées à partir d'une différence entre l'enveloppe supérieure (OE) et l'enveloppe inférieure (UE) .

**8.** Procédé selon l'une des revendications 1 à 6, une valeur moyenne glissante (GM) étant calculée pour la force de frottement (RK) et/ou le coefficient de frottement (RW), et la fluctuation (RKS) de la force de frottement et/ou la fluctuation (RWS) du coefficient de frottement étant déterminées à partir d'une distance de la force de frottement (RK) et/ou du coefficient de frottement (RW) à la valeur moyenne glissante (GM).

**9.** Procédé selon l'une des revendications précédentes, le corps antagoniste (10) étant conçu comme un cylindrique à base circulaire et comportant un axe central (12), et le corps de base (20) comportant une surface plane (22), le corps antagoniste (10) étant déplacé perpendiculairement à l'axe central (12) et parallèlement à la surface plane (22) du corps de base (20), l'axe central (12) étant parallèle à la surface plane (22).

**10.** Procédé selon l'une des revendications précédentes, un enregistrement sonore étant en outre effectué pendant le mouvement du corps antagoniste (10) par rapport au corps de base (20).

**11.** Procédé selon l'une des revendications précédentes d'évaluation du comportement acoustique d'un liquide de frein.

**12.** Dispositif d'évaluation du comportement acoustique d'un fluide (70), ledit dispositif comprenant un corps antagoniste (10) qui est mobile par rapport à un corps de base (20), alors que le fluide (70) se trouve entre le corps antagoniste (10) et le corps de base (20) ; un système d'entraînement (60) destiné à déplacer le corps antagoniste (10) par rapport au corps de base (20) ; et une unité d'enregistrement (80) destinée à enregistrer une force de frottement (RK) et/ou un coefficient de frottement (RW) entre le corps antagoniste (10) et le corps de base (20) en fonction d'un positionnement (P) du corps antagoniste (10) par rapport au corps de base (20), **caractérisé en ce que** le dispositif comporte une unité de calcul (82) destiné à déterminer une fluctuation (RKS) de la force de frottement à partir de la force de frottement (RK) et/ou une fluctuation (RWS) du coefficient de frottement à partir du coefficient de frottement (RW), et à calculer une valeur de fluctuation moyenne (SM) à partir de la fluctuation (RKS) de la force de frottement et/ou à partir de la fluctuation (RWS) du coefficient de frottement.

**13.** Dispositif selon la revendication 12, le corps antagoniste (10) étant conçu comme un cylindre à base circulaire et comportant un axe central (12), et le corps de base (20) ayant une surface plane (22), le corps antagoniste (10) pouvant être déplacé perpendiculairement à l'axe central (M) et parallèlement à la surface plane (22) du corps de base (20), l'axe central (12) étant parallèle à la surface plane (22).

**14.** Dispositif selon l'une des revendications 12 à 13, le corps antagoniste étant fabriqué à partir d'un élastomère et le corps de base étant fabriqué à partir d'un métal.

**Fig. 1**

EP 3 358 336 B1

Fig. 7

Fig. 2

13

**Fig. 3**

**Fig. 5**

**Fig. 4**

**Fig. 6**

EP 3 358 336 B1

## IN DER BESCHREIBUNG AUFGEFÜHRTE DOKUMENTE

### In der Beschreibung aufgeführte Patentdokumente

- EP 2379382 B1
- DE 102008063891 A1
- US 5679883 A
- US 6752001 B1
- US 2001020391 A1

### In der Beschreibung aufgeführte Nicht-Patentliteratur

- *Testing of Mineral Oil,* 1978
- **DR. J. MOLTER.** Werkstoffe in Tribosystemen - Prüfmethodik und Modellierung. Freudenberg Forschungsdienste KG, Januar 2006
- Hydraulikkomponenten. Dem Technischen Handbuch. Freudenberg Sealing Technologies GmbH & Co. KG, 2015
- **H. CZICHOS ; K. H. HABIG.** Tribologie-Handbuch: Tribometrie, Tribomaterialien, Tribotechnik. 2015
- **SCHRIFT.** GfT Arbeitsblatt 7 Tribologie - Verschleiß, Reibung - Definitionen, Begriffe, Prüfung. Gesellschaft für Tribologie Aachen, 2002
- **K. L. JOHNSON.** Contact Mechanics. Cambridge University Press, 1985
- **WERK.** Ueber die Berührung fester elastischer Körper
- Contact Mechanics. Cambridge University Press, 1985